# NEUE EUROPÄISCHE PATENTSCHRIFT

(11) **EP 3 691 942 B2**
(45) Veröffentlichungstag und Bekanntmachung des Hinweises auf die Entscheidung über den Einspruch: **03.12.2025**
(45) Hinweis auf die Patenterteilung: 20.07.2022
(21) Anmeldenummer: 18762476.2
(22) Anmeldetag: 24.08.2018
(51) Int. Cl.: B60T 13/68

(54) **PARKBREMS-VENTILEINRICHTUNG**
PARKING BRAKE VALVE ASSEMBLY
ENSEMBLE DE SOUPAPES POUR FREIN DE STATIONNEMENT

(30) Priorität: 07.10.2017 DE 102017009307
(43) Veröffentlichungstag der Anmeldung: 12.08.2020
(73) Patentinhaber: ZF CV Systems Europe BV, 1170 Brussels (BE)
(72) Erfinder: VAN THIEL, Julian, 30938 Grossburgwedel (DE)
(74) Vertreter: Bremer, Ulrich
(86) Internationale Anmeldenummer: PCT/EP2018/072889
(87) Internationale Veröffentlichungsnummer: WO 2019/068393

(56) Entgegenhaltungen:
- EP-A1- 2 055 542
- EP-A1- 3 098 129
- EP-A1- 3 098 129
- WO-A1-2017/121597
- DE-A1- 10 336 611
- DE-A1- 102005 051 686
- DE-A1- 102006 041 010
- DE-A1- 102006 041 010
- DE-A1- 102007 008 504
- DE-A1- 102008 014 458
- DE-A1- 102008 048 207
- DE-A1- 102009 059 900
- DE-A1- 102011 016 740
- DE-A1- 102011 016 740
- DE-A1- 102015 107 125
- DE-A1- 102015 112 490
- DE-A1- 102015 116 317
- DE-A1- 19 609 222
- DE-A1- 19 902 225
- DE-B3- 102006 034 762
- DE-B3- 102006 034 762
- DE-B4- 102007 061 908
- DE-B4- 102011 101 438
- US-A1- 2011 147 141
- US-A1- 2011 147 141

## Beschreibung

Die Erfindung betrifft ein Steuermodul für ein elektro-pneumatisches Bremssystem. Die Parkbrems-Ventileinrichtung ist zur Ansteuerung einer Federspeicher-Feststellbremse und eines Anhänger-Bremssystems vorgesehen und elektro-pneumatisch ausgebildet zur Ansteuerung durch eine elektronische Steuereinrichtung.

Ein derartiges elektro-pneumatisches Bremssystem ist insbesondere für ein Fahrzeug vorgesehen, das als Zugfahrzeug zur Ankopplung eines Anhängers mit Anhänger-Bremssystem vorgesehen ist. Hierzu ist im Allgemeinen eine pneumatische Kupplung, zum Beispiel mit gelbem und rotem Kupplungskopf, für eine Anhänger-Vorratsleitung und eine Anhänger-Steuerleitung vorgesehen.

Die Federspeicher-Feststellbremse ist selbstsperrend, d.h. im drucklosen bzw. entlüfteten Zustand eingelegt; sie wird über einen Parkbrems-Steuerausgang einer Parkbrems-Ventileinrichtung befüllt bzw. belüftet, um sie zu lösen. Elektro- pneumatische Handbremsen (EPH) ermöglichen ein Lösen und Feststellen der Federspeicher-Feststellbremse bzw. Parkbremse durch elektrische Betätigungen und sind aus Gründen der Sicherheit vorzugsweise bistabil ausgebildet, so dass ohne Bestromung sowohl der Parkzustand mit eingelegter Federspeicher-Feststellbremse (Parkbremse) als auch der Fahrzustand mit gelöster bzw. befüllter Federspeicher- Feststellbremse sicher gehalten werden.

Anhänger-Bremssysteme werden über das Zugfahrzeug angesteuert, wozu ein Trailer-Control-Ventil (TCV) vorgesehen ist, das im Allgemeinen die pneumatische Kupplung (z. B. gelber und roter Kupplungskopf) für das Anhänger-Bremssystem ansteuert, d. h. die Anhänger-Steuerleitung und Anhänger-Vorratsleitung. Im Allgemeinen findet im Trailer-Control-Ventil eine Druckluft-Umkehr eines eingegebenen pneumatischen Steuersignals statt, so dass das Trailer-Control-Ventil durch ein pneumatisches Steuersignal angesteuert wird, das es invertiert an das Anhänger-Bremssystem ausgibt; hierdurch wird unter anderem erreicht, dass die Betriebsbremsen des Anhängers gebremst werden, wenn das Zugfahrzeug über seine Feststellbremse gebremst wird.

In der Fahrstellung sind die Federspeicher-Feststellbremsen des Zugfahrzeugs und die Betriebsbremse des Anhängerfahrzeugs gelöst. In der Parkstellung ist die Federspeicher-Feststellbremse eingelegt, d. h. entlüftet, und die Betriebsbremse des Anhängerfahrzeugs über das TCV belüftet.

Weiterhin ist im Allgemeinen eine sogenannte Anhänger-Control-Stellung vorgesehen, bei der die Federspeicher-Feststellbremse im Zugfahrzeug eingelegt ist, aber die Betriebsbremse im Anhänger gelöst ist; hierdurch kann überprüft werden, ob das Zugfahrzeug alleine den Anhänger mit seinem gelösten Anhänger-Bremssystem halten kann, so dass auch z. B. bei einer Leckage oder einem Versagen der pneumatisch beaufschlagten Betriebsbremse im Anhänger die Federspeicher-Feststellbremse des Zugfahrzeugs auch den Anhänger allein halten kann.

Die DE 10 2015 112 490 A1 offenbart eine Steuereinrichtung einer Bremsanlage einer Zugfahrzeug-Anhängerkombination, bei der eine Ventileinrichtung derart gesteuert ist, dass ein zweiter Steuereingang eines zweiten Relaisventils zum Hilfsbremsen oder zum Betriebsbremsen mit einem abhängigen Steuerdruck beaufschlagt wird, und zum elektrisch gesteuerten Feststellbremsen mit einem Steuerdruck beaufschlagt wird, der eine Entlüftung eines zweiten Arbeitsausgangs des zweiten Relaisventils bewirkt. Falls bei elektrisch gesteuertem Betriebsbremsen ein Fehler auftritt, wird ein erster pneumatischer Steuereingang des zweiten Relaisventils mit dem an einem Steuereingangsanschluss herrschenden Steuerdruck beaufschlagt.

Der Aufbau einer derartigen Parkbrems-Ventileinrichtung zur Ansteuerung sowohl einer Federspeicher-Feststellbremse des Zugfahrzeugs als auch eines Anhänger-Bremssystems, erfordert somit im allgemeinen einen erheblichen Schaltungsaufwand, insbesondere auch mit mehreren Solenoid-Ventilen (elektro-pneumatischen Ventile), die somit hohe Kosten und auch hohe Ansteuerströme erfordern.

Der Erfindung liegt daher die Aufgabe zugrunde, ein Steuermodul für ein elektro-pneumatisches Bremssystem zu schaffen, das einen geringen Schaltungsaufwand bei hoher Sicherheit für das eigene Bremssystem und den angeschlossenen Anhänger ermöglicht.

Diese Aufgabe wird durch ein Steuermodul für ein elektro-pneumatisches Bremssystem nach Anspruch 1 gelöst. Die Unteransprüche beschreiben bevorzugte Weiterbildungen. Weiterhin ist ein elektro-pneumatisches Bremssystem mit einer derartigen Parkbrems-Ventileinrichtung vorgesehen.

Der Erfindung liegt der Gedanke zugrunde, die beiden Funktionen der elektronischen Parkbremse und der Anhänger-Bremssteuerung über eine Multiplex-Schalteinrichtung gemeinsam anzusteuern, das heißt zu multiplexen. Die Multiplex-Schalteinrichtung ist somit an den Druckluft-Eingang angeschlossen und weist vorzugsweise elektro-pneumatische Schaltmittel auf, durch die wahlweise die elektronische Parkbremse oder das Anhänger-Bremssystem ansteuerbar sind. Die Multiplex-Schalteinrichtung ermöglicht somit eine pneumatische Ansteuerung beider Funktions-Blöcke über elektro-pneumatische Schaltmittel, die somit für beide Funktionen, das heißt die elektronische Parkbremse und die Anhänger-Bremssteuerung, genutzt werden können.

Bereits hierdurch werden einige Vorteile erreicht:
So kann die Anzahl der eingesetzten Solenoid-Ventile reduziert werden, wodurch insbesondere Kosten eingespart werden können. Weiterhin wird eine kompakte Bauweise ermöglicht. Hierbei wird auch erkannt, dass ein derartiges Multiplexen in der Praxis kaum Nachteile mit sich bringt, da die elektronische Parkbremse im allgemeinen lediglich bei Fahrtbeginn zu belüften und bei Beendigung, das heißt beim Einlegen der Park-Stellung, wieder zu entlüften ist, sodass die Ansteuerung der elektronischen Parkbrems-Funktion grundsätzlich reduziert werden kann. Hierzu kann insbesondere eine selbsthaltende elektronische Parkbrems-Ventileinrichtung eingesetzt werden, die somit ihren eingegebenen Zustand selbsttägig hält und nur zum Umschalten angesteuert wird. Eine derartige bistabile elektronische Parkbremse ist als solche bekannt.

Somit kann die Multiplex-Schalteinrichtung im Fahrbetrieb insbesondere zur Ansteuerung des Anhänger-Bremssystems dienen.

Die Multiplex-Schalteinrichtung kann insbesondere einen Ansteuerbereich aufweisen, der zum einen über geeignete Einlass- und Auslass-Ventilmittel belüftet und entlüftet wird und zum anderen über geeignete Umschaltmittel dann an die EPH-Ventilausbildung oder die TCV-Einrichtung angeschlossen wird.

Zur Ansteuerung des Anhänger-Bremssystems ist vorzugsweise eine Trailer-Control-Ventil-Einrichtung (TCV-Einrichtung) vorgesehen, die zum einen über einen Anhänger-Versorgungs-Ausgang eine Anhänger-Vorratsleitung und zum anderen über einen Trailer-Control-Ausgang eine Anhänger-Steuerleitung (zur Einleitung der Anhänger-Bremsungen) versorgt (gelber und roter Kupplungskopf). Die TCV-Einrichtung kann insbesondere ein Anhänger-Relais-Ventil aufweisen, das über einen Anhänger-Vorsteuerbereich angesteuert wird, der wiederum durch die Multiplex-Schalteinrichtung angesteuert wird. Entsprechend ist die EPH-Ventilausbildung (Elektronische Parkbrems-Einrichtung) mit einem Parkbrems-Relais-Ventil ausgebildet, das vorzugsweise durch geeignete Sperrmittel bistabil bzw. selbsthaltend ausgebildet ist, um die jeweils eingestellte Stellung zu halten. Hierbei ist ein Parkbrems-Vorsteuerbereich zur Ansteuerung des Parkbrems-Relais-Ventils vorgesehen, das wiederum durch die Multiplex-Schalteinrichtung angesteuert wird.

Somit kann die Multiplex-Schalteinrichtung wiederum geeignete Relaisventile der beiden Funktionsblöcke ansteuern, sodass die Multiplex-Schalteinrichtung selbst lediglich pneumatische Steuer-Volumina aussteuert. Hierbei können sämtliche elektrische Ansteuerungen bzw. elektro-pneumatischen Ventile bereits in der Multiplex-Schalteinrichtung vorgesehen sein, sodass die beiden Funktionsblöcke der EPH-Ventilausbildung und TCV-Einrichtung selbst durch pneumatische Schaltmittel ausgebildet werden.

Ergänzend kann ein elektro-pneumatisches Redundanz-Ventil zur zusätzlichen Ansteuerung der TCV-Einrichtung vorgesehen sein, die wiederum ergänzend durch ein elektrisches Redundanz-Steuersignal angesteuert werden kann. Eine derartige Redundanz-Ansteuerung ist grundsätzlich bekannt.

Die Erfindung wird im Folgenden anhand der beiliegenden Zeichnungen an einigen Ausführungsformen näher erläutert. Es zeigen:
- Fig. 1: ein elektropneumatisches Schaltdiagramm einer Steuerventil-Einrichtung gemäß einer ersten Ausführungsform der Erfindung;
- Fig. 2: ein elektropneumatisches Schaltdiagramm einer Steuerventil-Einrichtung gemäß einer weiteren Ausführungsform der Erfindung.

Eine Steuerventil-Einrichtung 1 ist in einem Nutzfahrzeug, zum Beispiel LKW, vorgesehen und weist einen Druckluft-Eingang 1a zum Anschluss an einen Druckluft-Vorrat 3 mit einem Systemdruck p0, weiterhin einen Parkventil-Ausgang 1b zum Anschluss einer Federspeicher-Feststellbremse 4 sowie einen Trailer-Versorgungs-Ausgang 1c zum Anschluss einer pneumatischen Versorgungsleitung 12 und einen Trailer-Control-Ausgang 1d zum Anschluss einer pneumatischen Steuerleitung 13 eines Anhänger-Bremssystems 5 auf. Weiterhin ist im Allgemeinen ein Redundanz-Steuereingang 1e zum Eingang eines pneumatischen Redundanz-Signals vorgesehen.

Die Steuerventil-Einrichtung 1 weist somit die Funktionalität eines Parkbrems-Steuerventils sowie eines Trailer-Control-Ventils auf, wobei diese Funktionalitäten zum Teil durch doppelt belegte Ventile realisiert werden. Eine ECU (elektronische Steuereinrichtung) 8 dient zur Ansteuerung der Solenoid-Ventile der Steuerventil-Einrichtung 1, wobei die Steuerventil-Einrichtung 1 und die ECU 8 zusammen ein Steuermodul 9 bilden, das heißt als Baueinheit bzw. Modul ausgebildet sein können, bei dem die Ventile in zum Beispiel einem gemeinsamen Ventilblock ausgebildet werden und die ECU 8 daran befestigt wird, um direkt die elektrischen Ansteuerungen vorzunehmen und Messsignale aufzunehmen.

Die Parkbrems-Funktionalität wird insbesondere durch ein Parkbrems-Relaisventil 14 realisiert, das zwischen den Druckluft-Eingang 1a und den Parkbrems-Ausgang 1b geschaltet ist. Eine Bypass-Ventilausbildung 18, 19, 20, 21 dient zur selbsthaltenden Sicherung der jeweiligen Schaltzustände des Relaisventils 14 und ist insbesondere als Schutz gegen Leckagen bzw. Undichtigkeiten vorgesehen, wie weiter unten erläutert wird. Ein Parkbrems-Drucksensor 22 dient zur Messung des Ausgabedrucks p-1b am Parkbrems-Steuerausgang 1b und wird von der ECU 8 ausgelesen.

Die Trailer-Control-Funktionalität, das heißt die Ansteuerung des Anhänger-Bremssystems 5, wird durch ein Anhänger-Relais-Ventil 24 mit einem Relaisventil-Eingang 24a und einem Relaisventil-Ausgang 24b sowie einem pneumatischen Steuereingang 24c gebildet, wobei das Anhänger-Relais-Ventil 24 in üblicher Weise zur Luftmengen-Verstärkung dient; sein Relais-ventil-Ausgang 24b ist entsprechend an den Trailer-Control-Ausgang 1d für das Anhänger-Bremssystem 5 angeschlossen, das heißt an den gelben Kupplungskopf mit der Anhänger-Bremsdruckleitung (Anhänger-Steuerleitung) 13. Der rote Kupplungskopf mit der Anhänger-Vorratsleitung 12 ist zum Beispiel gemeinsam mit dem Relaisventil-Eingang 24a an den Druckluft-Eingang 1a angeschlossen, hier über ein Abreißventil 25, das als doppelt pneumatisch angesteuertes, in eine Grundstellung federvorgespanntes 2/2-Ventil mit einer Durchlassstellung und einer Drosselstellung ausgebildet ist und weiter unten erläutert wird.

Ein Redundanz-Ventil 26 ist als elektrisch angesteuertes 2/2-Sperrventil, vorzugsweise mit offener Grundstellung ausgebildet und an den Redundanz-Steuereingang 1e des Steuerventils 1 angeschlossen; sein Ausgang 26b ist an einen Anhänger-Vorsteuerbereich 27 angeschlossen. Der Anhänger-Vorsteuerbereich 27 dient zur pneumatischen Ansteuerung des Anhänger-Relaisventils 24 sowie auch zur Ansteuerung des Abreiß-Ventils 25 und wird weiterhin von einem Umschalt-Ventil 30 angesteuert, das als elektrisch angesteuertes 3/2-Wegeventil vorgesehen und mit seinem Ausgang je nach Schaltstellung entweder an den Anhänger-Vorsteuerbereich 27 oder einen Parkbrems-Vorsteuerbereich 15 zur Vorsteuerung des Parkbrems-Relaisventils 14 angeschlossen ist.

Weiterhin sind ein Einlassventil 10 sowie ein Auslassventil 11 vorgesehen, die jeweils als selbstsperrende, elektrisch angesteuerte 2/2-Wegeventile vorgesehen sind. Das Einlassventil 10, das Auslassventil11 und das Umschalt-ventil 30 dienen beiden Funktionen und somit als Multiplex-Schalteinrichtung 32 zur selektiven Vorsteuerung sowohl der Parkbrems-Funktion als auch der Anhänger-Steuer-Funktion.

Das Einlassventil 10 ist mit seinem Eingang 10a somit an den Druckluft-Eingang 1a angeschlossen, im Allgemeinen über ein Rückschlagventil 16 am Druckluft-Eingang 1a, und mit seinem Ausgang 10a an einen AussteuerBereich (Aussteuer-Leitungsbereich) 31, an den der Eingang 30a des Umschalt-Ventils 30 gelegt ist. Das Einlass-Ventil 10 wird von der ECU 8 über ein erstes elektrisches Steuersignal S1 angesteuert und legt den Aussteuerbereich bei S1=1 an den Druckluft-Eingang 1a, d.h. auf den Versorgungsdruck p0. Das Umschalt-Ventil 30 wiederum wird über ein drittes Steuersignal S3 angesteuert und legt den im Aussteuerbereich 31 anliegenden Druck p31 je nach seiner Ventilstellung an einen Parkbrems-Vorsteuerbereich 15 einer Parkbrems-Schalteinrichtung 33 oder den Anhänger-Vorsteuerbereich 27 einer Trailer-Control-Ventil-Einrichtung 34.

Gemäß der gezeigten Schaltung ist im Grundzustand, das heißt bei S3=0, der Aussteuerbereich 31 an den Parkbrems-Vorsteuerbereich 15 der Parkbrems-Schalteinrichtung 33 gelegt, die ein Parkbrems-Relaisventil 14, zwei Sperrventile 18, 20 und zwei Drosseln 19, 21 aufweist. Somit steuert der Aussteuerbereich 31 das Parkbrems-Relaisventil 14 aus, so dass in dieser Parkbrems-Steuerstellung mit S3=0 durch Ansteuerung des Einlassventils 10 mittels S1=1 oder S1=0 das Parkbrems-Relaisventil 14 angesteuert werden kann. Durch Ansteuerung des Auslassventils 11 mittels eines zweiten elektrischen Steuersignals S2=1 wird der Aussteuerbereich 31 an den Entlüftungsanschluss 1f gelegt.

Die Bypass-Schaltung 18, 19, 20, 21 dient dazu, einen einmal in den Parkbrems-Vorsteuerbereich 15 eingegebenen Aussteuer-Druck, das heißt den Systemdruck p0 des Druckluft-Vorrats 3, gegenüber Leckagen und Undichtigkeiten zu halten, bis der Parkbrems-Vorsteuerbereich 15 aktiv entlüftet wird:
bei S1=1 und S3=0, wenn somit der Parkbrems-Vorsteuerbereich 15 an den Druckluft-Eingang 1a gelegt und mit Systemdruck p0 belüftet wird, um das Parkbrems-Relaisventil 14 auszusteuern, wird weiterhin das Eingangs-Bypass-Ventil 18 an seinem pneumatischen Steuereingang 18c ausgesteuert und somit von seiner selbstsperrenden Grundstellung in die Durchlassstellung geöffnet, sodass der Parkbrems-Vorsteuerbereich 15 über das offene Eingang-Bypass-Ventil 18 und die Eingangs-Drossel 19 auch direkt an den Druckluft-Eingang 1a angeschlossen ist. Auch wenn somit nachfolgend das Umschaltventil 30 durch S3=1 umgeschaltet wird und somit der Parkbrems-Vorsteuerbereich 15von dem Aussteuerbereich 31 getrennt ist, ist er über die offene Eingangs-Bypass-Leitung direkt in den Druckluft-Eingang 1a gelegt; Leckagen in den Leitungen oder zum Beispiel auch den Eingangs-Bypass-Ventil 18 führen zu keiner Druckabsenkung im Relaisventil-Vorsteuerbereich 15, da über das offene Eingangs-Bypass-Ventile 18 weiterhin Druckluft vom Druckluft-Eingang 1a nachströmt und das Eingangs-Bypass-Ventil 18 auch selbsttägig offen hält. Weiterhin hält der unter Systemdruck p0 stehende Relaisventil-Vorsteuerbereich 15 auch das Ausgangs-Bypass-Ventil 20 gesperrt, da es auf den pneumatischen Steuereingang 20c einwirkt und somit das Ausgangs-Bypass-Ventil 20 in seine gesperrte Stellung schaltet. Eine Entlüftung des Relaisventil-Vorsteuerbereichs 15 ist wiederum nur über das in seiner Grundstellung sich befindende Umschaltventil 30 und das Auslass-ventil 11 möglich, das heißt durch S3=0 und S2=1. In diesem drucklosen Bereich des Relaisventil-Vorsteuerbereichs 15 ist das Ausgangs-Bypass-Ventil 20 in seiner offenen Grundstellung und entlüftet den Relaisventil-Vorsteuerbereich 15 somit sicher, damit auch keine Leckagen zum Beispiel über das Umschaltventil 30 oder das Eingangs-Bypass-Ventil 18 zu einer nicht vorgesehenen Druckluft-Erhöhung des Relaisventil-Vorsteuerbereichs 15 führen.

Durch Umschalten des Umschaltventils 30, das heißt mit S3=1, wird der Aussteuerbereich 31 an den Anhänger-Vorsteuerbereich 27 der TCV-einrichtung (Trailer-Control-Ventil-Einrichtung) 34 gelegt, die das Anhänger-Relais-Ventil 24, das Abreiß-Ventil 25 und vorzugsweise ein Redundanz-Ventil 26 aufweist. Somit kann - entsprechend der obigen Schilderung beim Relaisventil-Vorsteuerbereich 15 der Parkbrems-Schalteinrichtung 33 - der Aussteuerbereich 31 das Anhänger-Relais-Ventil 24 aussteuern. Das Abreiß-Ventil 25 legt den Anhänger-Vorsteuerbereich 27 je nach Druckwert im Anhänger-Vorsteuerbereich 27 gedrosselt oder ungedrosselt an den Druckluft-Eingang 1a.

In der federvorgespannten Grundstellung ist das Abreiß-Ventil 25 offen. Somit liegt der Systemdruck p0 über den Drucklufteingang 1a und das Rückschaltventil 16 an dem Eingang 24a des Anhänger-Relais-Ventils 24 an, sodass je nach Druckwert im Anhänger-Vorsteuerbereich 27 das Anhänger-Relais-Ventil 24 ausgesteuert wird und Systemdruck an den Versorgungs-ausgang 1d (Trailer-Control-Ausgang) und somit an die Anhänger-Bremsdruckleitung bzw. Anhänger-Steuerleitung 13 anliegt. Bei fehlender Druckluft-Befüllung des Anhänger-Vorsteuerbereichs 27 wird das Anhänger-Relaisventil 24 nicht aussteuert. Bei Druckluft-Befüllung des Anhänger-Vorsteuerbereichs 27 wird das Abreiß-Ventil 25, wenn kein hinreichend hoher Systemdruck p0 am Eingang 24a anliegt, in seine betätigte, drosselnde Stellung geschaltet. Entsprechend ist eine Entlüftung des Anhänger-Vorsteuerbereichs 27 auch wiederum über das Umschaltventil 30, das heißt bei S3=1, und das geöffnete Auslass-Ventil 11, das heißt S2=1, möglich.

Ein zweiter Drucksensor 23 ist zur Druckmessung am Versorgungs-Ausgang bzw. Trailer-Control-Ausgang 1d vorgesehen.

Das Redundanz-Ventil 26 ist im Allgemeinen zur Ansteuerung des Anhänger-Vorsteuerbereichs 27 vorgesehen, sodass über ein viertes elektrisches Steuersignal S4, mit S4=1 oder S4=0, direkt ein Redundanz-Steuereingang 1e auf den Anhänger-Vorsteuerbereich 27 gelegt werden kann, insbesondere als zusätzliche Sicherheit. Grundsätzlich kann diese Sicherheitsfunktion des Redundanz-Steuereingangs 1e auch entfallen.

Somit können durch ein gemeinsames Einlassventil 10 und Auslassventil 11 sowie das Umschaltventil 30, das heißt lediglich drei Solenoid- Ventile, sowohl die Parkbrems-Schalteinrichtung 33 zur Ansteuerung der Federspeicher-Feststellbremse 4 als auch die TCV-Einrichtung 34 ausgesteuert werden, wobei bei dem gezeigten Einsatz einer Redundanz über das Redundanz-Ventil 26 gegebenenfalls ein weiteres Solenoid Ventil eingesetzt wird.

Das Abreißventil 25 zwischen dem Eingang 24a des Anhänger-Relais-Ventils 24 und dem Druckluft-Eingangs 1a dient insbesondere dazu, um im Falle eines Abrisses der Anhänger-Steuerleitung 13, das heißt am gelben Kupplungskopf, bei Vorliegen eines Bremswunsches des Fahrers eine Bremsung einzuleiten:
Bei Vorliegen eines Bremssignals für das Anhänger-Bremssystem 5 ist der Anhänger-Vorsteuerbereich 27 durch S1=1 und S3=1 belüftet, oder im Redundanz-Sicherungsfall durch Druckluft-Ansteuerung über den Redundanz-Eingangs 1e. Somit ist das Anhänger-Relais-Ventil 24 ausgesteuert und legt die Anhänger-Steuerleitung 13 an den Druckluft-Eingang 1a, d.h. entsprechend der Anhänger-Vorratsleitung 12. Falls die Anhänger-Steuerleitung 13 reißt oder leckt, fällt am Eingang 24a des Anhänger-Relais-Ventils 24 bzw. im Leitungsbereich des Eingangs 24a somit der Druck, zum Beispiel unter den Druckwert von 9 bar, der im Anhänger-Vorsteuerbereich 27 vorliegt. Somit wird das Abreißventil 25 gegen seine relativ geringe Federvorspannung umgeschaltet; das pneumatische Steuersignal im Anhänger-Vorsteuerbereich 27 schaltet das Abreißventil 25 in seine betätigte Stellung mit gedrosseltem Durchlass, sodass auch der rote Kupplungskopf mit der Anhänger-Vorratsleitung 12 nur gedrosselt an den Druckluft-Eingang 1a angeschlossen ist. Beide Leitungen 12, 13 verlieren somit über die Leckage der Anhänger-Steuerleitung 13 an Luft, sodass das Anhänger-Bremssystem 5 gebremst wird. Somit kann bei Vorliegen eines Fahrer-Bremswunsches der Anhänger auch in dieser Abreißsituation gebremst werden.

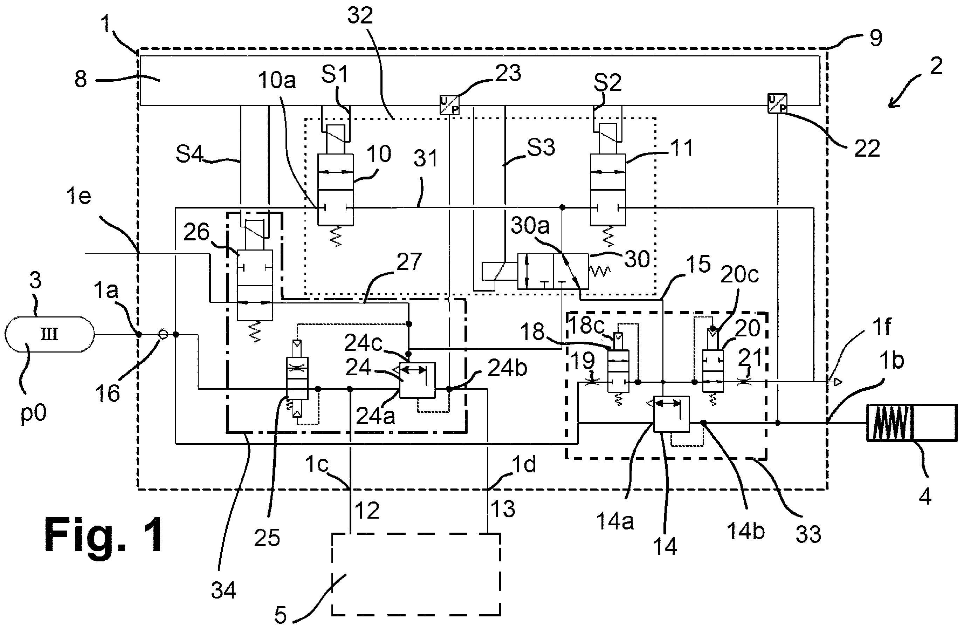

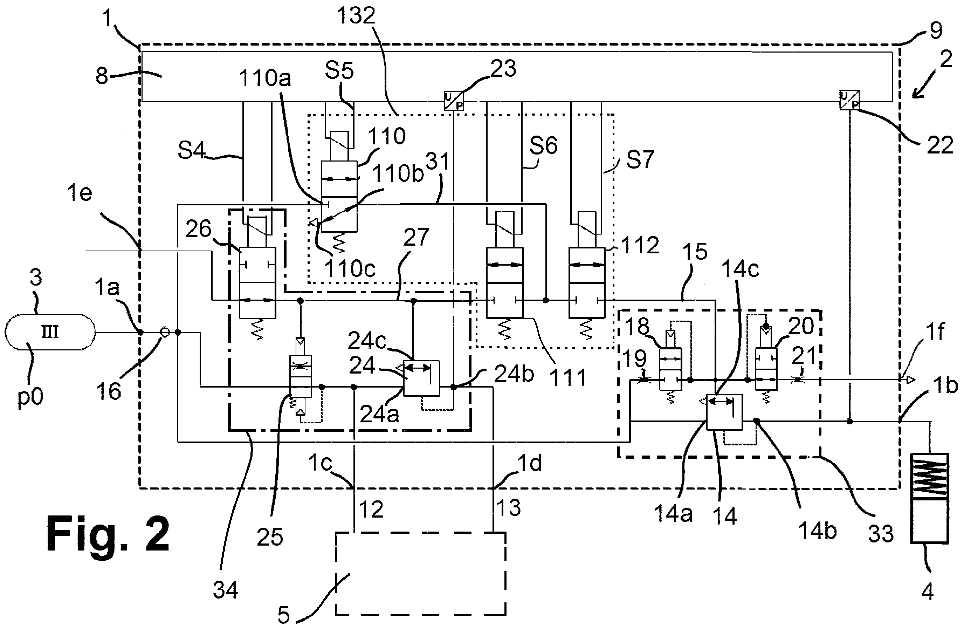

Die Ausführungsform der Figur 2 zeigt eine elektropneumatische Schaltung, bei der wie in der ersten Ausführungsform der Fig. 1
- die Anschlüsse 1a, 1b, 1c vorgesehen sind,
- die TCV-Einrichtung 34 mit ihren Ventilen 24, 25, 26 an die Ausgänge 1c und 1d angeschlossen ist und über das vierte elektrische Steuersignal S4 eine Redundanz- Ansteuerung möglich ist,
- wie in Fig. 1 eine Parkbrems-Schaltausbildung 33 mit den Ventilen 14, 18, 20 und den Drosseln 19, 21 vorgesehen ist,
- eine Multiplex-Schalteinrichtung 132 den beiden Bereichen 33, 34 vorgeschaltet ist, die allerdings eine andere Solenoid- Ventilausbildung aufweist: der Aussteuerbereich 31 wird in Fig. 2 über ein als 3/2-Solenoidventil ausgebildetes und mittels eines fünften elektrischen Steuersignal S5 angesteuertes Ein- und Auslassventil 110 be- und entlüftet, wobei der Aussteuerbereich 31 in der gezeigten Grundstellung mit S5=0 entlüftet und mit S5=1 belüftet wird.

Der Aussteuerbereich 31 wird durch zwei selbstsperrende Solenoid-Sperrventile 111, 112 dann jeweils an den Anhänger-Vorsteuerbereich 27 oder den Parkbrems-Vorsteuerbereich 15 gelegt. Hierbei wird mittels eines Anhänger-Steuersignals (sechstes elektrisches Steuersignal) S6 ein Anhänger -Ansteuerventil 111, und mittels eines Parkbrems-Steuersignals (siebtes elektrisches Steuersignal) ein Parkbrems- Ansteuerventil 112 angesteuert. Auch bei dieser Ausführungsform ist somit ein gemeinsamer Aussteuerbereich 31 für beide Funktionen vorgesehen. Die Ansteuerung der Vorsteuerbereiche 15, 27 kann bei dieser Ausführungsform durch die elektrischen Steuersignale S6 und S7 gleichzeitig oder getrennt erfolgen, da mit S6=S7=1 auch ein gleichzeitiger Anschluss der Vorsteuerbereiche 27, 15 an den Aussteuerbereich 31 möglich ist.

Falls zum Beispiel der Parkbrems-Vorsteuerbereich 15 mit S7=1 und S5=0 entlüftet werden soll, kann mit S6=0 der Anhänger-Vorsteuerbereich 27 von dem Ansteuerbereich 31 getrennt sein und wahlweise über das weiterhin vorgesehene Redundanz-Steuersignal S4 belüftet werden, das heißt mit S4=0 eine Druckluftzufuhr sichergestellt werden. Falls auch eine Entlüftung des Anhänger-Vorsteuerbereichs 27 vorgesehen ist, wird in dieser Situation bei S1=0 und S7=1 weiterhin S4=1 und S6=1 gewählt.

Ansonsten entsprechen die Funktionen der Ventile der Ausführungsform der Fig. 2 denjenigen der Fig. 1, insbesondere auch die Drucksensoren 22, 23, die Bypass-Ventile 18, 20, die Drosseln 19, 21 und das Abreißventil 25.

Somit ist bei beiden Ausführungsformen eine Multiplex-Schalteinrichtung 32, 132 vorgesehen, die einen Aussteuerbereich 31 belüftet und entlüftet und wahlweise an die Bereiche 33, 34 legt. Bei der Ausführungsform der Fig. 2 ist ein gleichzeitiger bzw. paralleler Anschluss des Aussteuerbereichs 31 an beide Bereiche 33, 34 möglich. Grundsätzlich lassen sich die Ausführungsformen der Fig. 1, 2 auch kombinieren, z.B. mit dem Umschaltventil 30 und Ein- und Auslassventil 110, so dass dann nur zwei elektrische Steuersignale S3, S5 erforderlich sind.

Die Steuerventil-Einrichtung 1, der Druckluft-Vorrat 3, die Federspeicher-Feststellbremse 4 und das Anhänger-Bremssystem 5 bilden ein elektropneumatisches Bremssystem 2, das somit kostengünstig und effizient ist.

### Bezugszeichenliste (Teil der Beschreibung)

- 1: Steuerventil-Einrichtung
- 1a: Druckluft-Eingang
- 1b: Parkbrems-Steuerausgang
- 1c: Trailer-Versorgungs-Ausgang, Druckluft-Ausgang
- 1d: Trailer-Control-Ausgang
- 1e: Steuereingang
- 1f: Entlüftungsanschluss

- 2: Elektropneumatisches Bremssystem
- 3: Druckluft-Vorrat
- 4: Federspeicher-Feststellbremse
- 5: Anhänger-Bremssystem

- 8: ECU (elektronische Steuereinrichtung)
- 9: Steuermodul
- 10: Einlassventil
- 10a: Eingang des Einlassventils 10
- 11: Auslassventil

- 12: Anhänger-Vorratsleitung, pneumatische Versorgungsleitung
- 13: Anhänger-Bremsdruckleitung, Anhänger-Steuerleitung

- 14: Parkbrems-Relaisventil
- 15: Parkbrems-Vorsteuerbereich
- 16: Rückschlagventil

- 18: Eingangs-Bypass-Ventil
- 18c: pneumatischer Steuereingang des Eingangs-Bypass-Ventils 18
- 19: Eingangs-Drossel
- 20: Ausgangs-Bypass-Ventil
- 20c: pneumatischer Steuereingang des Ausgangs-Bypass-Ventils 20
- 21: Ausgangs-Drossel
- 18, 19, 20, 21: Bypass-Ventilausbildung

- 22: erster Drucksensor
- 23: zweiter Drucksensor
- 24: Anhänger-Relais-Ventil
- 24a: Eingang des Anhänger-Relais-Ventils
- 24b: Ausgang des Anhänger-Relais-Ventils
- 24c: pneumatischer Steuereingang des Anhänger-Relais-Ventils
- 25: Abreißventil
- 26: Redundanz-Ventil
- 27: Anhänger-Vorsteuerbereich

- 30: Umschaltventil
- 30a: Eingang des Umschaltventils
- 31: Aussteuerbereich
- 32: Multiplex-Schalteinrichtung der Fig. 1
- 132: Multiplex-Schalteinrichtung der Fig. 2
- 33: EPH-Ventilausbildung 14, 18, 19, 20,21
- 34: TCV-Einrichtung, Trailer-Control- Ventil-Einrichtung 24, 25, 26

- 110: Ein- und Auslassventil
- 110a: Eingang des Ein- und Auslassventils 110
- 110b: Ausgang des Ein- und Auslassventils 110
- 110c: Entlüftung des Ein- und Auslassventils 110
- 111: Anhänger-Ansteuerventil
- 112: Parkbrems- Ansteuerventil

- p-1b: Ausgabedruck
- p0: Systemdruck

- S1: erstes elektrisches Steuersignal
- S2: zweites elektrisches Steuersignal
- S3: drittes elektrisches Steuersignal
- S4: viertes elektrisches Steuersignal
- S5: fünftes elektrisches Steuersignal
- S6: Anhänger-Steuersignal, sechstes elektrisches Steuersignal
- S7: Parkbrems-Steuersignal, siebtes elektrisches Steuersignal

## Patentansprüche

1. Steuermodul (9) für ein elektro-pneumatisches Bremssystem (2), das aufweist eine elektronische Steuereinrichtung (8), und
eine Parkbrems-Ventileinrichtung (1) zur Ansteuerung einer Federspeicher-Feststellbremse (4) in dem elektro-pneumatischen Bremssystem (2),
wobei die Parkbrems-Ventileinrichtung (1) aufweist:
einen Druckluft-Eingang (1a) zum Anschluss an eine Druckluft-Versorgung (3),
eine Elektro-pneumatische-Handbremsen-Ventilausbildung (33) und einen Parkbrems-Steuerausgang (1b) zum Anschluss einer Federspeicher-Feststellbremse (4),
eine Trailer-Control-Ventil-Einrichtung (34) zur Ansteuerung eines Trailer-Control-Ausgangs (1d) und eines Trailer-Versorgungs-Ausgangs (1c) für ein Anhänger-Bremssystem (5), sowie
eine Multiplex-Schalteinrichtung (32, 132), die an den Druckluft-Eingang (1a) angeschlossen ist und aufweist:
- elektro-pneumatische Schaltventile (10, 11, 30; 110, 111, 112), , und
- einen Aussteuerbereich (31), der über mindestens ein elektro-pneumatisches Ventil (10, 11; 110) durch Ansteuerung mittels mindestens einen elektrischen Steuersignals (S1, S2; S5) der elektronischen Steuereinrichtung (8) an den Druckluft-Eingang (1a) und an eine Entlüftung (1f, 110c) anschließbar ist,
- wobei die elektronische Steuereinrichtung (8) ausgebildet ist, die elektro-pneumatischen Schaltventile (10, 11, 30; 110, 111, 112) über elektrische Steuersignale (S1, S2, S3; S5, S6, S7) anzusteuern zur wahlweisen DruckluftBeaufschlagung und Entlüftung der Elektro-pneumatische-Handbremsen-Ventilausbildung (33) und/oder der Trailer-Control-Ventil-Einrichtung (34),
- wobei die elektronische Steuereinrichtung (8) ausgebildet ist, den Aussteuerbereich (31) über elektropneumatische Umschaltmittel (30; 111, 112) der elektro-pneumatischen Schaltventile wahlweise mit entweder der Elektro-pneumatische-Handbremsen-Ventilausbildung (33) oder der Trailer-Control-Ventil-Einrichtung (34) zu verbinden.

2. Steuermodul (9) nach Anspruch 1, **dadurch gekennzeichnet, dass** als Umschaltmittel ein elektrisch angesteuertes 3/2-Umschaltventil (30) vorgesehen ist, das den Aussteuerbereich (31) entweder an die Elektro-pneumatische-Handbremsen-Ventilausbildung (33) oder an die Trailer-Control-Ventil-Einrichtung (34) anlegt.

3. Steuermodul (9) nach Anspruch 1, **dadurch gekennzeichnet, dass** die Umschaltmittel zwei Sperrventile, vorzugsweise zwei elektro-pneumatische 2/2-Sperrventile (111, 112) aufweisen, durch die die Elektro-pneumatische-Handbremsen-Ventilausbildung (33) und/oder die Trailer-Control-Ventil-Einrichtung (34) mit dem Aussteuerbereich (31) verbindbar ist.

4. Steuermodul (9) nach einem der vorherigen Ansprüche, **dadurch gekennzeichnet, dass** die Elektro-pneumatische-Handbremsen-Ventilausbildung (33) ein Relaisventil (14) und einen das Relaisventil (14) ansteuernden Relaisventil-Vorsteuerbereich (15) aufweist, der durch die Multiplex-Schalteinrichtung (32) ansteuerbar ist, wobei durch das Parkbrems-Relaisventil (14) der Parkbrems-Steuerausgang (1b) mit dem Druckluft-Eingang (1a) verbindbar ist.

5. Steuermodul (9) nach Anspruch 3, **dadurch gekennzeichnet, dass** an den Relaisventil-Vorsteuerbereich (15) eine Bypass-Schaltung (18, 19, 20, 21) zum selbsttätigen Halten eines Druckzustandes des Relaisventil-Vorsteuerbereichs (15) angeschlossen ist.

6. Steuermodul (9) nach Anspruch 5, **dadurch gekennzeichnet, dass** die Bypass-Schaltung (18, 19, 20, 21) den Relaisventil-Vorsteuerbereich (15) und den hieran angeschlossenen pneumatischen Steuereingang (14c) des Relaisventils (14) bei Vorliegen eines hinreichenden Aussteuer-Schaltdrucks selbsttätig mit dem Druckluft-Eingang (1a) und/oder dem Relaisventil-Eingang (14a) verbindet und in der verbundenen Stellung hält, bis der Relaisventil-Vorsteuerbereich (15) aktiv entlüftet wird.

7. Steuermodul (9) nach Anspruch 6, **dadurch gekennzeichnet, dass** die Bypass-Schaltung (18, 19, 20, 21) den Relaisventil-Vorsteuerbereich (15) und den hieran angeschlossenen pneumatischen Steuereingang (14c) des Relaisventils (14) bei Vorliegen eines hinreichenden Aussteuer-Schaltdrucks selbsttätig mit dem Druckluft-Eingang (1a) und/oder dem Relaisventil-Eingang (14a) verbindet, vorzugsweise auch bei nachfolgendem Sperren des Verbindungsventils (11).

8. Steuermodul (9) nach einem der Ansprüche 5 bis 7, **dadurch gekennzeichnet, dass** der Relaisventil-Vorsteuerbereich (15) im entlüfteten Zustand, insbesondere nach aktiver Entlüftung durch das dritte elektrische Steuersignal (S3), durch die Bypass-Schaltung (18, 19, 20, 21) selbsttätig in dem entlüfteten Zustand gehalten wird, indem die Bypass-Schaltung (18, 19, 20, 21) den Relaisventil-Vorsteuerbereich (15) an eine Entlüftung (1f) legt.

9. Steuermodul (9) nach einem der Ansprüche 5 bis 8, **dadurch gekennzeichnet, dass** der Relaisventil-Vorsteuerbereich (15) durch die Bypass-Schaltung (18, 19, 20, 21) mit dem Druckluft-Eingang (1a) oder der Entlüftung (1f) jeweils über eine Drossel (19, 20) und ein pneumatisch angesteuertes Sperrventil (18, 20) verbunden ist, zur Kompensation kleinerer Luftströme, insbesondere von Leckage-Strömen, wobei mindestens eines der Sperrventile (18, 20) offen ist zur Verbindung des Relaisventil-Vorsteuerbereichs (15) mit dem Druckluft-Eingang (1a) und/oder der Entlüftung.

10. Steuermodul (9) nach Anspruch 9, **dadurch gekennzeichnet, dass** nur jeweils eines der Sperrventile (18, 20) offen ist zur Verbindung des Relaisventil-Vorsteuerbereichs (15) mit entweder dem Druckluft-Eingang (1a) oder der Entlüftung, und das andere Sperrventil (18, 20) geschlossen ist.

11. Steuermodul (9) nach einem der vorherigen Ansprüche, **dadurch gekennzeichnet, dass** die Trailer-Control-Ventil-Einrichtung (34) ein Anhänger-Relaisventil (24) aufweist, das zwischen den Druckluft-Eingang (1a) und den Trailer-Control-Steuerausgang (1d) geschaltet und durch einen Relaisventil-Vorsteuerbereich (15) ansteuerbar ist, der an die Multiplex-Schalteinrichtung (32, 132) angeschlossen ist.

12. Steuermodul (9) nach Anspruch 11, **dadurch gekennzeichnet, dass** die Trailer-Control-Ventil-Einrichtung (34) ein Abreißventil (25) aufweist, das zwischen den Druckluft-Eingang (1a) und den Trailer-Versorgungs-Anschluss (1c) und das Anhänger-Relaisventil (24) geschaltet ist, wobei das Abreißventil (25) in seiner Grundstellung offen ist und in Abhängigkeit einer Druckdifferenz zwischen den Anhänger-Vorsteuerbereich (27) und dem Trailer-Versorgungs-Anschluss (1c) zwischen einer offenen und einer gedrosselten Stellung schaltbar ist, zum Drosseln der Druckluft-Zufuhr von dem Druckluft-Eingang (1a) an den Trailer-Versorgungs-Anschluss (1c) bei einem Unterdruck am Trailer-Versorgungs-Anschluss (1c) gegenüber dem Anhänger-Vorsteuerbereich (27).

13. Steuermodul (9) nach Anspruch 11 oder 12, **dadurch gekennzeichnet, dass** die Trailer-Control-Ventil-Einrichtung (34) ein zwischen einer Sperrstellung und geöffneten Stellung schaltbares Redundanzventil (26), vorzugsweise mit elektrischer Ansteuerung, aufweist, zum Anschluss des Anhänger-Vorsteuerbereichs (27) an einen Redundanz-Eingang (1e) der Parkbrems-Ventileinrichtung (1) für eine redundante Ansteuerung des Anhänger-Relaisventils (24).

14. Elektro-pneumatisches Bremssystem (2), das aufweist:
ein Steuermodul (9) nach einem der vorherigen Ansprüche,
eine an den Druckluft-Eingang (1a) angeschlossenen Druckluft-Versorgung, zum Beispiel ein Druckluft-Speicher (3),
eine an den Parkbrems-Ausgang (1b) angeschlossene Federspeicher-Feststellbremse (4),
ein an den Trailer-Control-Steuerausgang (1d) und den Trailer-Versorgungs-Anschluss (1c) angeschlossenes Anhänger-Bremssystem (5),
wobei die elektronische Steuereinrichtung (8) eingerichtet ist zur Ausgabe der elektrischen Steuersignale (S1, S2, S3, S4; S5, S6, S7) zur pneumatischen Ansteuerung der Federspeicher-Feststellbremse (4) und des Anhänger-Bremssystems (5).

## Claims

1. Control module (9) for an electro-pneumatic brake system (2), which control module comprises an electronic control device (8), and
a parking brake valve device (1) for actuating a spring-loaded parking brake (4) in the electro-pneumatic brake system (2), wherein the parking brake valve device (1) comprises:
a compressed air input (1a) for connection to a compressed air supply (3), an electro-pneumatic handbrake valve configuration (33) and a parking brake control output (1b) for connection to a spring-loaded parking brake (4),
a trailer control valve device (34) for actuating a trailer control output (1d) and a trailer supply output (1c) for a trailer brake system (5), and
a multiplex switching device (32, 132) connected to the compressed air input (1a) and comprising:
- electro-pneumatic switching valves (10, 11, 30; 110, 111, 112), and
- a modulation region (31) which can be connected to the compressed air input (1a) and to a vent (1f, 110c) via at least one electro-pneumatic valve (10, 11; 110) through actuation by means of at least one electrical control signal (S1, S2; S5) of the electronic control device (8),
- wherein the electronic control device (8) is designed to actuate the electro-pneumatic switching valves (10, 11, 30; 110, 111, 112) via electrical control signals (S1, S2, S3; S5, S6, S7) in order to selectively apply compressed air to and vent the electro-pneumatic handbrake valve configuration (33) and/or the trailer control valve device (34),
- wherein the electronic control device (8) is designed to connect the modulation region (31) selectively to either the electro-pneumatic handbrake valve configuration (33) or the trailer control valve device (34) via electro-pneumatic switchover means (30; 111, 112) of the electro-pneumatic switching valves.

2. Control module (9) according to claim 1, **characterized in that** as the switchover means, an electrically actuated 3/2-way switchover valve (30) is provided which applies the modulation region (31) either to the electro-pneumatic handbrake valve configuration (33) or to the trailer control valve device (34).

3. Control module (9) according to claim 1, **characterized in that** the switchover means comprise two shut-off valves, preferably two electro-pneumatic 2/2-shut-off valves (111, 112), by means of which the electro-pneumatic handbrake valve configuration (33) and/or the trailer control valve device (34) can be connected to the modulation region (31).

4. Control module (9) according to any of the preceding claims, **characterized in that** the electro-pneumatic handbrake valve configuration (33) comprises a relay valve (14) and a relay valve pilot control region (15) which actuates the relay valve (14) and which can be actuated by the multiplex switching device (32), the parking brake control output (1b) being able to be connected to the compressed air input (1a) via the parking brake relay valve (14).

5. Control module (9) according to claim 3, **characterized in that** a bypass circuit (18, 19, 20, 21) for automatically maintaining a pressure state of the relay valve pilot control region (15) is connected to the relay valve pilot control region (15).

6. Control module (9) according to claim 5, **characterized in that** the bypass circuit (18, 19, 20, 21) automatically connects the relay valve pilot control region (15) and the pneumatic control input (14c) of the relay valve (14), which input is connected to said region, to the compressed air input (1a) and/or to the relay valve input (14a) when a sufficient modulation switching pressure is present, and holds them in the connected position until the relay valve pilot control region (15) is actively vented.

7. Control module (9) according to claim 6, **characterized in that** the bypass circuit (18, 19, 20, 21) automatically connects the relay valve pilot control region (15) and the pneumatic control input (14c) of the relay valve (14), which input is connected to said region, to the compressed air input (1a) and/or to the relay valve input (14a) when a sufficient modulation switching pressure is present, preferably also when the connecting valve (11) is subsequently shut off.

8. Control module (9) according to any of claims 5 to 7,
**characterized in that** the relay valve pilot control region (15) in the vented state, in particular after active venting by the third electrical control signal (S3), is automatically held in the vented state by the bypass circuit (18, 19, 20, 21) by the bypass circuit (18, 19, 20, 21) applying the relay valve pilot control region (15) to a vent (1f).

9. Control module (9) according to any of claims 5 to 8,
**characterized in that** the relay valve pilot control region (15) is connected by the bypass circuit (18, 19, 20, 21) to the compressed air input (1a) or the vent (1f), in each case via a throttle (19, 20) and a pneumatically controlled shut-off valve (18, 20), in order to compensate for smaller air flows, in particular leakage flows, at least one of the shut-off valves (18, 20) being open for connecting the relay valve pilot control region (15) to the compressed air input (1a) and/or the vent.

10. Control module (9) according to claim 9, **characterized in that** only one of the shut-off valves (18, 20) in each case is open for connecting the relay valve pilot control region (15) to either the compressed air input (1a) or the vent, and the other shut-off valve (18, 20) is closed.

11. Control module (9) according to any of the preceding claims,
**characterized in that** the trailer control valve device (34) comprises a trailer relay valve (24) which is connected between the compressed air input (1a) and the trailer control control output (1d) and can be actuated by a relay valve pilot control region (15) which is connected to the multiplex switching device (32, 132).

12. Control module (9) according to claim 11, **characterized in that** the trailer control valve device (34) comprises a breakaway valve (25) which is connected between the compressed air input (1a) and the trailer supply connection (1c) and the trailer relay valve (24), the breakaway valve (25) being open in the basic position thereof and being switchable between an open and a throttled position, depending on a pressure difference between the trailer pilot control region (27) and the trailer supply connection (1c), in order to throttle the compressed air supply from the compressed air input (1a) to the trailer supply connection (1c) in the event of a negative pressure at the trailer supply connection (1c) compared to the trailer pilot control region (27).

13. Control module (9) according to claim 11 or claim 12,
**characterized in that** the trailer control valve device (34) comprises a redundancy valve (26), preferably having electrical actuation, which is switchable between a shut-off position and an open position, for connecting the trailer pilot control region (27) to a redundancy input (1e) of the parking brake valve device (1) for redundant actuation of the trailer relay valve (24).

14. Electro-pneumatic brake system (2), comprising:
a control module (9) according to any of the preceding claims,
a compressed air supply connected to the compressed air input (1a), for example a compressed air reservoir (3),
a spring-loaded parking brake (4) connected to the parking brake output (1b),
a trailer brake system (5) connected to the trailer control control output (1d) and the trailer supply connection (1c),
wherein the electronic control device (8) is configured to output the electrical control signals (S1, S2, S3, S4; S5, S6, S7) for pneumatically actuating the spring-loaded parking brake (4) and the trailer brake system (5).

## Revendications

1. Module de commande (9) pour un système de frein électropneumatique (2) présentant un dispositif de commande électronique (8), et
un dispositif à soupapes de frein de stationnement (1) pour la commande d'un frein de stationnement à accumulateur à ressorts (4) dans le système de frein électropneumatique (2), dans lequel le dispositif à soupapes de frein de stationnement (1) présente :
une entrée d'air comprimé (1a) pour le raccordement à une alimentation en air comprimé (3), une formation de soupape de frein à main électropneumatique (33) et une sortie de commande de frein de stationnement (1b) pour le raccordement d'un frein de stationnement à accumulateur à ressorts (4),
un dispositif à soupape de commande de remorque (34) pour la commande d'une sortie de commande de remorque (1d) et une sortie d'alimentation de remorque (1c) pour un système de frein de remorque (5), ainsi que
un dispositif de commutation multiplex (32, 132) raccordé à l'entrée d'air comprimé (1a) et présentant :
- des soupapes de commutation électropneumatiques (10, 11, 30 ; 110, 111, 112), et
- une zone de réglage (31) pouvant être raccordée à l'entrée d'air comprimé (1a) et à une purge (1f, 110c) par l'intermédiaire d'au moins une soupape électropneumatique (10, 11 ; 110) par commande au moyen d'au moins un signal de commande électrique (S1, S2 ; S5) du dispositif de commande électronique (8),
- dans lequel le dispositif de commande électronique (8) est configuré pour commander les soupapes de commutation électropneumatiques (10, 11, 30 ; 110, 111, 112) par l'intermédiaire de signaux de commande électriques (S1, S2, S3 ; S5, S6, S7) pour, au choix, l'alimentation en air comprimé et la purge de la formation de soupape de frein à main électropneumatique (33) et/ou du dispositif à soupape de commande de remorque (34),
- dans lequel le dispositif de commande électronique (8) est configuré pour raccorder la zone de réglage (31), par l'intermédiaire de moyens de commutation électropneumatiques (30 ; 111, 112) des soupapes de commutation électropneumatiques, au choix, soit à la formation de soupape de frein à main électropneumatique (33), soit au dispositif à soupape de commande de remorque (34).

2. Module de commande (9) selon la revendication 1,
**caractérisé en ce qu'**une soupape de commutation 3/2 (30) à commande électrique est prévue sous forme de moyens de commutation, laquelle applique la zone de réglage (31) soit à la formation de soupape de frein à main électropneumatique (33), soit au dispositif à soupape de commande de remorque (34).

3. Module de commande (9) selon la revendication 1, **caractérisé en ce que** les moyens de commutation présentent deux vannes d'arrêt, de préférence deux vannes d'arrêt 2/2 électropneumatiques (111, 112), par lesquelles la formation de soupape de frein à main électropneumatique (33) et/ou le dispositif à soupape de commande de remorque (34) peuvent être raccordés à la zone de réglage (31).

4. Module de commande (9) selon l'une des revendications précédentes, **caractérisé en ce que** la formation de soupape de frein à main électropneumatique (33) présente une soupape relais (14) et une zone pilote de soupape relais (15) commandant la soupape relais (14), laquelle zone pilote de soupape relais peut être commandée par le dispositif de commutation multiplex (32), dans lequel la sortie de commande de frein de stationnement (1b) peut être raccordée à l'entrée d'air comprimé (1a) par la soupape relais de frein de stationnement (14).

5. Module de commande (9) selon la revendication 3, **caractérisé en ce qu'**un circuit de dérivation (18, 19, 20, 21) est raccordé à la zone pilote de soupape relais (15) pour le maintien automatique d'un état de pression de la zone pilote de soupape relais (15).

6. Module de commande (9) selon la revendication 5, **caractérisé en ce que** le circuit de dérivation (18, 19, 20, 21) raccorde automatiquement la zone pilote de soupape relais (15), et l'entrée de commande pneumatique (14c) de la soupape relais (14) qui y est raccordée, à l'entrée d'air comprimé (1a) et/ou à l'entrée de soupape relais (14a) en présence d'une pression de commutation de réglage suffisante et les maintient dans la position raccordée jusqu'à ce que la zone pilote de soupape relais (15) soit activement purgée.

7. Module de commande (9) selon la revendication 6, **caractérisé en ce que** le circuit de dérivation (18, 19, 20, 21) raccorde automatiquement la zone pilote de soupape relais (15), et l'entrée de commande pneumatique (14c) de la soupape relais (14) qui y est raccordée, à l'entrée d'air comprimé (1a) et/ou à l'entrée de soupape relais (14a) en présence d'une pression de commutation de réglage suffisante, de préférence également lorsque la soupape de raccordement (11) est bloquée par la suite.

8. Module de commande (9) selon l'une des revendications 5 à 7,
**caractérisé en ce que** la zone pilote de soupape relais (15) est maintenue automatiquement à l'état purgé par le circuit de dérivation (18, 19, 20, 21) à l'état purgé, en particulier après la purge active par le troisième signal de commande électrique (S3), dans lequel le circuit de dérivation (18, 19, 20, 21) applique la zone pilote de soupape relais (15) à une purge (1f).

9. Module de commande (9) selon l'une des revendications 5 à 8,
**caractérisé en ce que** la zone pilote de soupape relais (15) est raccordée, par le circuit de dérivation (18, 19, 20, 21), à l'entrée d'air comprimé (1a) ou à la purge (1f), respectivement par l'intermédiaire d'un étrangleur (19, 20) et d'un clapet antiretour (18, 20) à commande pneumatique, pour la compensation de petits flux d'air, en particulier de flux de fuite, dans lequel au moins l'un des clapets antiretour (18, 20) est ouvert pour le raccordement de la zone pilote de soupape relais (15) à l'entrée d'air comprimé (1a) et/ou à la purge.

10. Module de commande (9) selon la revendication 9, **caractérisé en ce que** respectivement un seul des clapets antiretour (18, 20) est ouvert pour le raccordement de la zone pilote de soupape relais (15) soit à l'entrée d'air comprimé (1a), soit à la purge, et l'autre clapet antiretour (18, 20) est fermé.

11. Module de commande (9) selon l'une des revendications précédentes, **caractérisé en ce que** le dispositif à soupape de commande de remorque (34) présente une soupape relais de remorque (24) raccordée entre l'entrée d'air comprimé (1a) et la sortie de commande de commande de remorque (1d) et pouvant être commandée par une zone pilote de soupape relais (15) raccordée au dispositif de commutation multiplex (32, 132).

12. Module de commande (9) selon la revendication 11,
**caractérisé en ce que** le dispositif à soupape de commande de remorque (34) présente une soupape de rupture (25) commutée entre l'entrée d'air comprimé (1a) et le raccord d'alimentation de remorque (1c) et la soupape relais de remorque (24), dans lequel la soupape de rupture (25) est ouverte dans sa position de base et peut être commutée entre une position ouverte et une position étranglée en fonction d'une différence de pression entre la zone pilote de remorque (27) et le raccord d'alimentation de remorque (1c), pour l'étranglement de l'amenée en air comprimé de l'entrée d'air comprimé (1a) au raccord d'alimentation de remorque (1c) en présence de dépression au niveau du raccord d'alimentation de remorque (1c) par rapport à la zone pilote de remorque (27).

13. Module de commande (9) selon la revendication 11 ou 12,
**caractérisé en ce que** le dispositif à soupape de commande de remorque (34) présente une soupape redondante (26) pouvant être commandée entre une position de blocage et une position ouverte, de préférence avec une commande électrique, pour le raccordement de la zone pilote de remorque (27) à une entrée redondante (1e) du dispositif à soupapes de frein de stationnement (1) pour une commande redondante de la soupape relais de remorque (24).

14. Système de frein électropneumatique (2), présentant : un module de commande (9) selon l'une des revendications précédentes, une alimentation en air comprimé raccordée à l'entrée d'air comprimé (1a), par exemple un accumulateur d'air comprimé (3), un frein de stationnement à accumulateur à ressorts (4) raccordé à la sortie de frein de stationnement (1b), un système de frein de remorque (5) raccordé à la sortie de commande de commande de remorque (1d) et au raccordement d'alimentation de remorque (1c), dans lequel le dispositif de commande électronique (8) est configuré pour émettre les signaux de commande électriques (S1, S2, S3, S4 ; S5, S6, S7) pour la commande pneumatique du frein de stationnement à accumulateur à ressorts (4) et du système de frein de remorque (5).
